Europäisches Patentamt

European Patent Office

Office européen des brevets

(11) Veröffentlichungsnummer: **0 237 856**
**A2**

(12) **EUROPÄISCHE PATENTANMELDUNG**

(21) Anmeldenummer: **87102863.5**

(22) Anmeldetag: **27.02.87**

(51) Int. Cl.⁴: **B24D 13/20 , B24B 45/00**

(30) Priorität: **19.03.86 DE 3609145**
    **02.06.86 DE 8614840 U**
    **05.09.86 DE 3630309**

(43) Veröffentlichungstag der Anmeldung:
**23.09.87 Patentblatt 87/39**

(84) Benannte Vertragsstaaten:
**AT BE CH DE ES FR GB GR IT LI NL SE**

(71) Anmelder: **Fabritius, Hans J.**
**Paul-Klee-Weg 57**
**D-4400 Münster(DE)**

(72) Erfinder: **Fabritius, Hans J.**
**Paul-Klee-Weg 57**
**D-4400 Münster(DE)**

(74) Vertreter: **Patentanwälte Schulze Horn und**
**Hoffmeister**
**Goldstrasse 36**
**D-4400 Münster(DE)**

(54) **Stützteller für ein auswechselbares Schleifscheibenblatt.**

(57) Die Erfindung betrifft einen Stützteller für ein auswechselbares Schleifscheibenblatt mit einem als elastisches Kunststoff-Formteil tellerförmig rotationssymmetrisch ausgebildeten Körper mit einem schraubbaren Befestigungselement für das Schleifscheibenblatt, wobei der Stützteller lösbar mit einer Antriebsmaschine verbindbar ist, der dadurch gekennzeichnet ist, daß der Körper (I) in seinem zentralen Bereich (2) ein eingeformtes Aufnahmestück (3) aus Metall aufweist, daß das Aufnahmestück (3) maschinenseitig eine zentrische Aufnahmebohrung (4) mit Innengewinde (5) zum Anschluß an eine Antriebsspindel (I0) der Antriebsmaschine und an seiner Unterseite (6) einen Gewindedorn (7) mit Außengewinde (8) für das Befestigungselement - (9) aufweist und daß das Befestigungselement (7) flach-konisch mit einem Innengewinde (22) ausgebildet ist.

Fig.1

# Stützteller für ein auswechselbares Schleifscheibenblatt

Die Erfindung betrifft einen Stützteller für ein auswechselbares Schleifscheibenblatt mit einem als elastisches Kunststoff-Formteil tellerförmig rotationssymmetrisch ausgebildeten Körper mit einem schraubbaren Befestigungselement für das Schleifscheibenblatt, wobei der Stützteller lösbar mit einer Antriebsmaschine verbindbar ist.

Herkömmliche Stützteller aus Gummi oder Kunststoff weisen vielfach einen einstückig geformten rotationssymmetrischen Körper mit einer zentralen Bohrung auf. Bei diesen dient ein von der Oberseite des Körpers her durch dessen zentrale Bohrung sowie durch das Schleifscheibenblatt eingeführter Spannbolzen mit endseitig je einem Innengewinde unter Verwendung einer vom Schleifscheibenblatt her einschraubbaren Schraube mit vergrößertem Kopf zur gleichzeitigen Verbindung von Stützteller und Schleifscheibe mit der Gewindespindel der Antriebsmaschine, z. B. eines Winkelschleifers oder einer Bohrmaschine. Ein derartiges, als Schraube ausgebildetes Befestigungselement besitzt üblicherweise einen flachen Spannkopf, mit dem es ein Schleifscheibenblatt gegen eine versenkte Spannfläche des Stütztellers einspannt. Der Spannkopf weist mehrere und üblicherweise auf unterschiedlichen Lochkreisdurchmessern vorgesehene Bohrungen auf, welche zum Eingriff eines sogenannten Krallen schlüssels dienen. Weil unterschiedlich ausgebildete Krallenschlüssel im Handel und somit in Verwendung sind, sind die entsprechenden Eingriffsbohrungen unterschiedlich in Durchmesser und Anordnung auf den unterschiedlichen Lochkreisdurchmessern.

Von Nachteil ist hierbei, daß bei jedem Wechsel des Schleifscheibenblattes ein besonderer Krallenschlüssel sowie ein passender Maulschlüssel zum Kontern an der Gewindespindel des Winkelschleifers erforderlich sind, und daß sich außerdem bei diesem Wechselvorgang der gesamte Stützteller von dem Spannbolzen lösen kann. Teilweise ergibt sich auch infolge Toleranzabweichungen bei der zentralen Bohrung und/oder bei der Anordnung und Ausbildung der Eingriffsbohrungen für den Krallenschlüssel eine Unwucht, welche sich bei den üblichen Drehzahlen im Bereich von beispielsweise 10000 Umdrehungen pro Minute bereits als störende Vibration bemerkbar macht.

Wegen des außenseitigen Gewindes auf dem Befestigungselement ist eine genaue Zentrierung der von diesem gehaltenen Schleifscheibenblätter kaum erreichbar, was ebenfalls zu Unwucht führt und die Standzeit des Schleifscheibenblattes vermindert. Weiterhin kann die Umrandung des Loches im Schleifscheibenblatt beim Einführen des Befestigungselementes durch dessen Gewinde leicht beschädigt werden, was die Zentrierung noch ungenauer macht.

Weiterhin kann bei bekannten Stütztellern Schleifstaub be und Schleifscheibenabrieb in die Gewindegänge des Befestigungselementes gelangen und dieses schwergängig machen.

Es stellt sich daher die Aufgabe, einen Stützteller der eingangs genannten Art zu schaffen, der die aufgeführten Nachteile vermeidet und der insbesondere eine verbesser te und vereinfachte Handhabung bietet, der einen exakten und unwuchtfreien Rundlauf gewährleistet und dessen Funktion nicht durch Schleifstaub und dergleichen beeinträchtigt werden kann.

Die Lösung dieser Aufgabe gelingt bei einem Stützteller der eingangs genannten Art dadurch, daß der Körper in seinem zentralen Bereich ein eingeformtes Aufnahmestück aus Metall aufweist, daß das Aufnahmestück maschinenseitig eine zentrische Aufnahmebohrung mit Innengewinde zum Anschluß an eine Antriebsspindel der Antriebsmaschine und an seiner Unterseite einen Gewindedorn mit Außengewinde für das Befestigungselement aufweist und daß das Befestigungselement flach-konisch mit einem Innengewinde ausgebildet ist.

Durch die erfingungsgemäße Anordnung des eingeformten Aufnahmestückes aus Metall wird ein exakter Rundlauf ohne Unwucht erreicht. Weil dieses Aufnahmestück maschinenseitig eine zentrale Aufnahmebohrung mit Innengewinde zum Anschluß an eine Antriebsspindel und am anderen Ende einen Gewindedorn mit Außengewinde für das dementsprechend mit einem kompatiblen Innengewinde versehene Befestigungselement aufweist, kann im Gegensatz zum Stand der Technik der so ausgebildete Stützteller nach dem einmaligen Anschrauben an die Gewindespindel z. B. eines Winkelschleifers auf dieser sitzenbleiben, wenn das Schleifscheibenblatt gewechselt wird. Hierbei wird die Wechselzeit für den Austausch des Schleifscheibenblattes erheblich vermindert und es wird wegen der glatten Außenfläche des Befestigungselementes auf einfache Art und Weise eine exakte Zentrierung des Schleifscheibenblattes erreicht.

Weitere vorteilhafte Ausgestaltungen des Stütztellers und des zugeordneten Befestigungselementes sind entsprechend den Merkmalen der Ansprüche 2 bis 10 vorgesehen.

Der Gegenstand der Erfindung wird in einer rein schematischen Zeichnung in drei bevorzugten Ausführungsformen gezeigt, wobei aus der Zeichnung weitere vorteilhafte Einzelheiten entnehmbar sind.

Die Figuren I bis 3 der Zeichnung zeigen einen Stützteller mit einem Befestigungselement und einem auswechselbaren Schleifscheibenblatt im Schnitt, in drei Ausführungen.

Wie aus Figur I zu ersehen ist, weist der Körper I des Stütztellers II in seinem zentralen Bereich 2 ein eingeformtes Aufnahmestück 3 aus Metall auf. Dieses Aufnahmestück 3 besizt maschinenseitig eine zentrale Aufnahmebohrung 4 mit Innengewinde 5 zum Anschluß an eine Antriebsspindel I0 einer Antriebsmaschine, z. B. eines Winkelschleifers. An der Unterseite 6 weist das Aufnahmestück 3 einen Gewindedorn 7 mit Außengewinde 8 für ein Befestigungselement 9 auf.

Wie aus der Darstellung ohne weiteres zu erkennen ist, ergibt sich mit der erfindungsgemäßen Ausführung des Stütztellers II der große Vorteil, daß im Gegensatz zum Stand der Technik beim Wechsel eines Schleifscheibenblattes lediglich das Befestigungselement 9 gelöst und herausgedreht zu werden braucht, wogegen der Stützteller II selbst nicht von der Spindel I0 des Schleifgerätes gelöst wird.

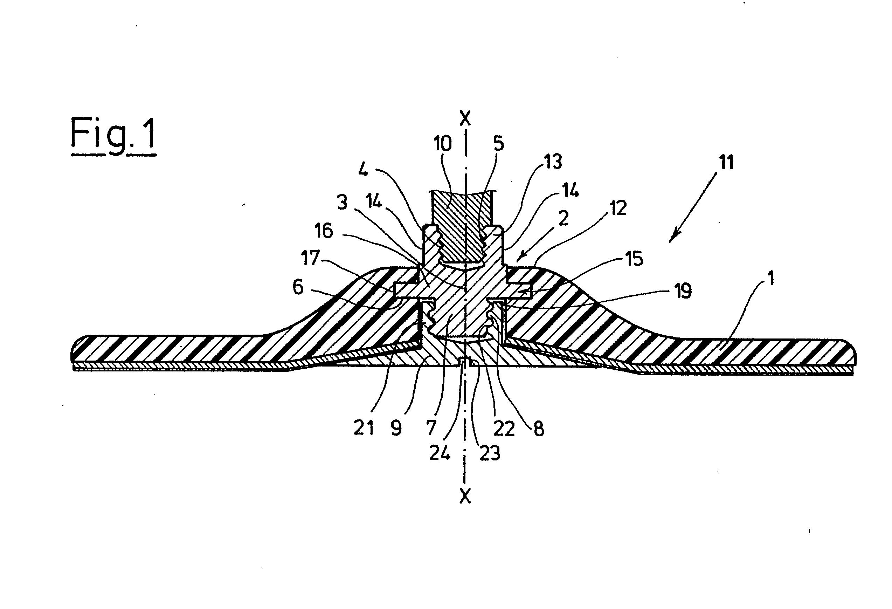

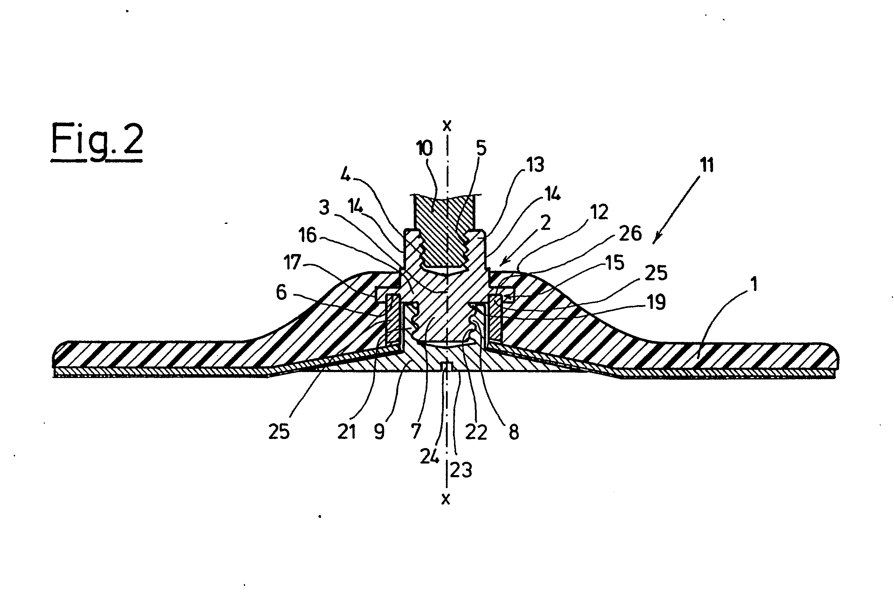

Gemäß Figur 2 weist der Teller II wahlweise eine den Dorn 7 umgebende, von diesem für die Einführung des Befestigungselementes 9 bzw. dessen Gewindeteiles 2I ausreichend beabstandete Metallhülse 25 auf. Diese hat vorzugsweise die Form eines Hohlzylinders und sorgt für eine erhöhte Stabilität und Steifigkeit des Stütztellers II. Die Metallhülse 25 kann z. B. in eine Nut 26 im Aufnahmestück 3 eingepreßt sein, wodurch eine einfache und kostengünstige Herstellung des Stütztellers gewährleistet wird.

Bei den in der Zeichnung dargestellten drei Ausführungen des Tellers II ist gemäß Figur I vorgesehen, daß das Aufnahmestück 3 ein im wesentlichen rotationssymmetrisches Formteil ist und mit der Aufnahmebohrung 4 und dem Gewindedorn 7 konzentrisch zu der dem Körper I des Stütztellers II und dem Aufnahmestück 3 gemeinsam zugeordneten Rotationssymmetrieachse x-x angeordnet ist. Hierdurch ergibt sich einerseits ein exakt zentrischer Sitz des Stütztellers mit guten und unwuchtfreien Laufeigenschaften und andererseits eine wesentliche Verringerung der zum Auswechseln eines Schleifscheibenblattes erforderlichen Arbeitszeit und somit ein Gewinn an Produktivität.

Eine vorteilhafte Ausgestaltung sieht vor, daß die maschinenseitige Aufnahmebohrung 4 in einem aus der Oberseite I2 des Stützteller II herausragenden Stutzen I3 des Aufnahmestückes 3 angeordnet ist. Hierdurch wird erreicht, daß der axiale Abstand des Stütztellers vom Winkelgetriebekopf eines Winkelschleifers je nach Wahl der Länge des Stutzens variabel ist. Je nach Art der auszuführenden Schleifarbeit wird ein kleinerer oder ein größerer axialer Abstand ermöglicht.

Bei den Ausführungen nach den Figuren I und 2 weist der Stutzen I3 vorzugsweise an seiner Außenseite wenigstens zwei Schlüsselflächen I4 zum Ansetzen eines Maulschlüssels auf. Hierdurch kann der komplette Schleifteller auf einfache Weise von der Antriebsspindel gelöst werden.

Sehr vorteilhaft ist das Aufnahmestück 3 mit einer in die Werkstoffmasse, vorzugsweise Kunststoff-Spritzguß, des Körpers I eingebetteten Verdrehsicherung I5 ausgebildet. Diese ist mit dem Aufnahmestück vorzugsweise einstückig und mit von dessen Grundkörper I6 radial abstehenden Flächenteilen I7 ausgebildet. Solche radialen Flächenteile I7 der Verdrehsicherung I5 können als Polygon wie Dreieck, Viereck usw., oder als einzelne radiale Arme ausgebildet sein.

Eine vorteilhafte Ausgestaltung des Befestigungselementes 9 besteht darin, daß dieses an seinem flach-konischen Spannkopf 20, genauer an dessen ebenflächiger Unterseite 23 einen zum Eingriff mit einem Schraubenzieher oder einer Münze ausgebildeten Schraubschlitz 24 aufweist. Ein Stück Flacheisen oder ein großer Schraubenzieher oder zumindest eine Münze ist jederzeit zur Hand, im Gegensatz zu dem Krallenschlüssel, wie er zur Befestigung eines Schleifscheibenblattes bei einem herkömmlichen Stützteller erforderlich ist. Auch ist das Befestigungselement 9 ein rotationssymmetrischer Metallkörper ohne Bohrungen für den Krallenschlüssel und somit ein sehr unkompliziert und preisgünstig herstellbares Massendrehteil oder Massenformteil.

Eine weitere Erleichterung beim Auswechseln eines Schleifscheibenblattes ergibt sich dadurch, daß der hohle Schaft 2I des Befestigungselementes 9 innenseitig mit einem zylinderförmigen oder konischen Einführende I9 ohne Gewinde ausgebildet ist. Durch Ausbildung des Gewindes 22 als Schnellschraubgewinde großer Steigung wird ein Schleifscheibenblatt-Wechsel weiter vereinfacht und beschleunigt.

Außer wie in den Ausführungsbeispielen dargestellt, kann an der Unterseite 23 des Befestigungselementes 9 anstelle eines Schlitzes 24 auch ein Mehrkantloch für einen entsprechenden einfachen Schlüssel oder, wodurch ein Werkzeug völlig überflüssig wird, ein aus der Unterseite herausklappbares, von Hand betätigbares Drehgriffteil zum manuellen Drehen des Befestigungsteiles angeordnet sein.

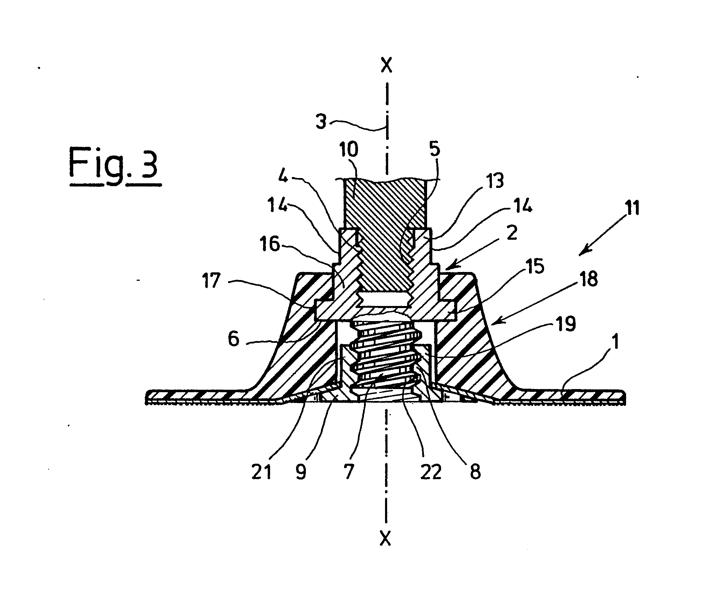

Bei dem Stützteller nach Figur 3 ist vorgesehen, daß der Körper des Tellers maschinenseitig einen im wesentlichen zylindrisch oder leicht konisch geformten, als Handgriff zum Gegenhalten des Stütztellers beim Lösen und/oder Anziehen des Befestigungselementes 9 dienenden Halsteil 18 aufweist. Hierdurch kann der Teller von Hand, d. h. ohne ein Werkzeug, wie Maulschlüssel, an einer Drehung gehindert werden, wenn das Befestigungselement gelöst oder festgedreht wird. Dabei wird der Durchmesser und die Höhe sowie die Oberflächenstruktur des Halsteils so gewählt, daß mit einer Hand der Benutzer des Tellers bzw. der Schleifmaschine eine ausreichend große Haltekraft ausüben kann.

## Ansprüche

1. Stützteller für ein auswechselbares Schleifscheibenblatt mit einem als elastisches Kunststoff-Formteil tellerförmig rotationssymmetrisch ausgebildeten Körper mit einem schraubbaren Befestigungselement für das Schleifscheibenblatt, wobei der Stützteller lösbar mit einer Antriebsmaschine verbindbar ist, dadurch gekennzeichnet, daß der Körper (I) in seinem zentralen Bereich (2) ein eingeformtes Aufnahmestück (3) aus Metall aufweist, daß das Aufnahmestück (3) maschinenseitig eine zentrische Aufnahmebohrung (4) mit Innengewinde (5) zum Anschluß an eine Antriebsspindel (I0) der Antriebsmaschine und an seiner Unterseite (6) einen Gewindedorn (7) mit Außengewinde (8) für das Befestigungselement (9) aufweist und daß das Befestigungselement (7) flach-konisch mit einem Innengewinde (22) ausgebildet ist.

2. Stützteller nach Anspruch I, dadurch gekennzeichnet, daß das Befestigungselement (9) ein rotationssymmetrischer Metallkörper ist und einen flach-konischen Spannkopf (20) und einen hohlen Schaft (2I) mit Innengewinde (22) aufweist.

3. Stützteller nach den Ansprüchen I und 2, dadurch gekennzeichnet, daß der hohle Schaft (2I) innenseitig mit einem zylinderförmigen oder konischen Einführende (I9) ohne Gewinde ausgebildet ist.

4. Stützteller nach den Ansprüchen I bis 3, dadurch gekennzeichnet, daß das Innengewinde (22) des Schaftes (2I) sowie das zugehörige Außengewinde des Bolzens (7) Schnellschraubgewinde großer Steigung sind.

5. Stützteller nach den Ansprüchen I bis 4, dadurch gekennzeichnet, daß das Befestigungselement (9) an seiner Unterseite (23) einen zum Eingriff mit einem Schraubenzieher oder einer Münze ausgebildeten Schraubschlitz (24) und/oder wenigstens zwei Vertiefungen zur Aufnahme eines Krallenschlüssels und/oder ein aus der Unterseite (23) herausklappbares, von Hand betätigbares Drehgriffteil zum manuellen Drehen des Befestigungselementes (9) ohne Einsatz von Werkzeug aufweist.

6. Stützteller nach den Ansprüchen I bis 5, dadurch gekennzeichnet, daß das Aufnahmestück (3) ein im wesentlichen rotationssymmetrisches Formteil ist und mit der Aufnahmebohrung (4) und dem Gewindedorn (7) konzentrisch zu der dem Körper (I) des Stütztellers (II) und dem Aufnahmestück (3) gemeinsam zugeordneten Rotationssymmetrieachse (x-x) angeordnet ist.

7. Stützteller nach einem der Ansprüche I bis 6, dadurch gekennzeichnet, daß die maschinenseitige Aufnahmebohrung (4) in einem aus der Oberseite (I2) des Stütztellers (II) herausragenden Stutzen (I3) des Aufnahmestückes (3) angeordnet ist und daß der Stutzen (I3) an seiner Außenseite wenigstens zwei Schlüsselflächen (I4) zum Ansetzen eines Maulschlüssels aufweist.

8. Stützteller nach einem der Ansprüche I bis 7, dadurch gekennzeichnet, daß das Aufnahmestück (3) mit einer in die Werkstoffmasse des Körpers (I) eingebetteten Verdrehsicherung (I5) ausgebildet ist, die vorzugsweise mit dem Aufnahmestück (3) einstückig und mit von dessen Grundkörper (I6) radial abstehenden Flächenteilen (I7), wie Polygonflächen oder einzelnen radialen Armen ausgebildet ist.

9. Stützteller nach den Ansprüchen I bis 8, gekennzeichnet durch eine den Gewindedorn (7) umgebende, von diesem für die Einführung des Befestigungselementes (9) ausreichend beabstandete Metallhülse (25).

10. Stützteller nach den Ansprüchen I bis 9, dadurch gekennzeichnet, daß der Körper (I) maschinenseitig einen im wesentlichen zylindrisch oder leicht konisch geformten, als Handgriff zum Gegenhalten des Stütztellers beim Lösen und/oder Anziehen des Befestigungselementes (9) dienenden Halsteil (I8) aufweist.

Fig.2

Fig. 3

0 237 856